# EUROPEAN PATENT SPECIFICATION

(11) **EP 3 601 866 B1**
(45) Date of publication and mention of the grant of the patent: **04.05.2022**
(21) Application number: 18715090.9
(22) Date of filing: 23.03.2018
(51) Int. Cl.: F16K 15/03, F16L 55/10

(54) **VALVE ASSEMBLY FOR USE IN A FLUID CONDUIT**
VENTILANORDNUNG ZUR VERWENDUNG IN EINER FLUIDLEITUNG
ENSEMBLE VANNE DESTINÉ À ÊTRE UTILISÉ DANS UN TUYAU DE FLUIDE

(30) Priority: 24.03.2017 GB 201704650
(43) Date of publication of application: 05.02.2020
(73) Proprietor: Gall Thomson Environmental Limited, Tewkesbury GL20 8UQ (GB)
(72) Inventor: COOPER, Neil, Great Yarmouth Norfolk NR30 2JR (GB)
(74) Representative: Potter Clarkson
(86) International application number: PCT/GB2018/050763
(87) International publication number: WO 2018/172787

(56) References cited:
- EP-A2- 0 989 327
- WO-A1-2012/076242
- IT-A1- MI20 092 146
- US-B1- 6 568 654

## Description

This invention relates to a valve assembly, and a pipeline coupling for use in a fluid conduit, such as a pipeline.

It is known to use a valve to control the flow of flowable material through a fluid conduit. The valve may be activated so as to be in a valve closed position, thus preventing the flow of flowable material through the fluid conduit. The valve may however experience a failure or a force such that the valve may move towards a valve open position, thus allowing the flowable material to leak past the valve and through the fluid conduit.

EP 0 989 327 A2 discloses a hydraulic tensioner having an external rack that limits a maximum piston travel and limits or restricts backlash. WO 2012/076242 A1 discloses a petal type control valve for separable connection units for transfer tubes of fluid products. IT MI20 092 146 A1 discloses a connection unit for flexible hoses. US 6 568 654 B1 discloses a mechanism used for locking a valve that provides positive control of a valve lock.

According to a first aspect of the invention, there is provided a valve assembly, for use in a fluid conduit, comprising:
a locking device including:
   a plunger for engaging a valve in the fluid conduit, the plunger arranged to be moveable in a first axial direction from an undeployed position to a deployed position, the plunger when in its deployed position configured for holding the valve in a valve closed position; and
   a locking element arranged to engage the plunger in its deployed position so as to prevent movement of the plunger in a second axial direction, the second axial direction being opposite to the first axial direction,
wherein the valve assembly further includes:
   an assembly housing defining a hollow bore along which flowable material may flow; and
   a valve moveable between a valve open position and a valve closed position, the valve when in the valve open position opening the hollow bore so as to allow flowable material to flow along the hollow bore, the valve when in the valve closed position closing the hollow bore so as to prevent flowable material from flowing along the hollow bore,
   wherein the plunger in its deployed position engages the valve so as to hold the valve in the valve closed position,
   wherein the valve includes a pivot portion, the pivot portion being pivotally coupled to the assembly housing, the valve being moveable between the valve open position and the valve closed position upon pivotal movement of the pivot portion, wherein the plunger in its deployed position engages the pivot portion so as to hold the valve in the valve closed position.

In use, the plunger may be moved in the first axial direction from its undeployed position to its deployed position in order to help retain the valve in the valve closed position. However the valve may experience a force that tends to cause the valve to open, i.e. move from its valve closed position to its valve open position. Such a force may arise as a result of, for example, direct impact from a flow of fluid against the closed valve and/or a change in pressure in fluid behind the closed valve causing a suction effect. The magnitude of the force may be such that the plunger is incapable of preventing the force from causing the valve to open.

The inclusion of the locking element in the locking device of the invention allows it to mechanically arrest, i.e. positively lock, the movement of the plunger in the second axial direction, thus locking the plunger in its deployed position. In this way, a simple and effective means of arrest is provided. Such a feature is particularly useful when, for example, the locking device forms part of a fluid conduit through which flowable material can flow.

The inclusion of the locking element in the locking device of the invention therefore provides a more reliable locking device for securing the valve in its valve closed position.

The locking device may be configured in a number of ways to enable the axial movement of the plunger from its undeployed position to its deployed position, examples of which are described as follows.

The locking device may further include a biasing element configured to apply a biasing force to the plunger in the first axial direction. The biasing element may be or may include a resilient biasing member. The resilient biasing member may be a spring, which provides a mechanical means for applying the biasing force. A spring can be readily reset and reused, and can be selected depending on the spring characteristics, such as the spring force and the displacement of the spring from a compressed position to an extended position, necessary to meet the requirements of the locking device.

Applying a biasing force to the plunger in the first axial direction can be particularly useful if there exists an opposing force on the plunger in the second axial direction which can be balanced or overcome by the biasing element. The biasing element may be selected depending on the expected opposing force on the plunger. The opposing force may be, for example, the force of a flow of fluid though the fluid conduit or frictional resistance due to the engagement between the plunger and locking element. The biasing element may be configured to push or pull the plunger when applying the biasing force.

The locking element may be arranged to engage the plunger in its deployed position in various ways in order to enable the prevention of the movement of the plunger in the second axial direction.

In embodiments of the invention, the locking element may be arranged to engage the exterior of the plunger in its deployed position so as to prevent movement of the plunger in the second axial direction. This is particularly useful when the plunger is designed to house a biasing element, such as a spring.

In further embodiments of the invention, one of the plunger and locking element may include at least one first engagement element, the other of the plunger and locking element may include at least one second engagement element, and the or each first engagement element may be arranged to engage the or the respective second engagement element when the locking element is engaged with the plunger in its deployed position so as to prevent movement of the plunger in the second axial direction.

In such embodiments, the or each first engagement element may be in the form of a protruding element and/or the or each second engagement element may be in the form of a protruding element or receptacle.

In further such embodiments, the or each first engagement element may be circumferentially arranged about the one of the plunger and locking element and/or the or each second engagement element may be circumferentially arranged about the other of the plunger and locking element.

In still further embodiments of the invention, the locking device may include first and second ratchet members, the first ratchet member arranged on or forming part of the plunger, the second ratchet member arranged on or forming part of the locking element, the first and second ratchet members arranged so that the first and second ratchet members are mutually engageable to permit relative movement between the first and second ratchet members in one direction and prevent relative movement between the first and second ratchet members in the opposite direction so as to permit movement of the plunger in the first axial direction and prevent movement of the plunger in the second axial direction. Preferably the first and second ratchet members are arranged so that the first and second ratchet members are mutually engaged when the plunger is in its deployed position.

The combination of the first and second ratchet members provides a ratchet mechanism which enables the plunger to move in the first axial direction to its deployed position so as to carry out the task of holding the valve in the valve closed position while at the same time preventing the movement of the plunger in the second axial direction. The ratchet mechanism is particularly useful when the locking device further includes a biasing element configured to apply a biasing force to the plunger in the first axial direction, because the mutual engagement between the first and second ratchet members does not hinder the applied biasing force from moving the plunger in the first axial direction.

It will be appreciated that the configuration of the first and second ratchet members may vary so long as the first and second ratchet members are mutually engageable to permit relative movement between the first and second ratchet members in one direction and prevent relative movement between the first and second ratchet members in the opposite direction. Exemplary configurations of the first and second ratchet members are described as follows.

One of the first and second ratchet members may include at least one protruding element (e.g. a tooth), the or each protruding element having an asymmetrical profile.

One of the first and second ratchet members may include a plurality of protruding elements, each protruding element having an asymmetrical profile, the plurality of protruding elements circumferentially arranged about the one of the first and second ratchet members.

The use of a plurality of protruding elements in the one of the first and second ratchet members provides a reliable means of applying a mechanical locking force at multiple engagement points between the first and second ratchet members. This not only improves the reliability of the locking of the plunger in its deployed position, but also permits the distribution of the mechanical locking force across the multiple engagement points to reduce stress and wear at each engagement point.

The other of the first and second ratchet members may include a protruding element (e.g. tooth) or receptacle (e.g. a groove) having an asymmetrical profile. Furthermore the other of the first and second ratchet members may include a series of protruding elements or receptacles, each protruding element or receptacle having an asymmetrical profile. When one of the first and second ratchet members includes a plurality of protruding elements, the or each protruding element or receptacle may be circumferentially arranged about the other of the first and second ratchet members.

The asymmetrical profile is shaped to permit relative movement between the first and second ratchet members in one direction and prevent relative movement between the first and second ratchet members in the opposite direction. For example, a first edge of the asymmetrical profile may be configured to have a gradual slope that permits the opposing ratchet member to readily slide over the first edge to pass the given protruding element or receptacle in one direction, while a second edge of the asymmetrical profile may be configured to have a steep slope that catches the opposing ratchet member to prevent it from sliding over the second edge to pass the given protruding element or receptacle in the opposite direction, thereby locking the opposing ratchet member against the given protruding element or receptacle.

Preferably the asymmetrical profile includes: a first edge arranged to be angled to the direction of axial movement of the plunger; and a second edge arranged to be perpendicular or substantially perpendicular to the direction of axial movement of the plunger.

In embodiments of the invention, the locking element may be arranged to be spaced apart from the plunger when the plunger is in its undeployed position. This may be achieved by, for example, shaping the plunger to define a gap between the plunger and locking element when the plunger is in its undeployed position and to permit engagement between the plunger and locking element when the plunger is in its deployed position.

The locking element may be elastically deflectable. This enables the locking element to provide a gripping force when engaging the plunger in its deployed position. Furthermore, when the locking device includes first and second ratchet members, the second ratchet can be elastically deflected as it moves relative to the first ratchet member.

The plunger may be arranged to be moveable in the first axial direction from its undeployed position to a plurality of deployed positions. The locking device may be arranged to be capable of engaging the plunger in a plurality of deployed positions so as to prevent movement of the plunger in the second axial direction, thus allowing the locking device to be implemented in a wider range of applications. Also, the ability of the locking element to engage the plunger in a plurality of deployed positions compensates for differences between valves which may arise as a result of, for example, manufacturing variation and/or wear and tear.

In other embodiments of the invention, the or each first engagement element may extend along an axial length of the one of the plunger and locking element, the or each second engagement element may include a retention formation, the first and second engagement elements may be mutually engageable with one another to guide the axial movement of the plunger from its undeployed position to its deployed position, wherein the or each first engagement element may further include a detent formation, the detent formation of the or each first engagement element arranged to locate the retention formation of the or the respective second engagement element when the plunger is in its deployed position so as to prevent movement of the plunger in the second axial direction.

The or each first engagement element extending along an axial length of the one of the plunger and locking element ensures precise axial movement of the plunger to its deployed position when the first and second engagement elements are mutually engaged with one another.

In addition the use of the or each detent formation to locate the corresponding retention formation assists in the locking of the plunger in its deployed position. The locking device can be reset automatically or manually to release the or each retention formation from the corresponding detent formation when it is no longer necessary to prevent axial movement of the plunger in the second axial direction. In this manner the detent and retention formations in combination can provide a temporary lock of the plunger's position.

The one of the plunger and locking element may include multiple first engagement elements, and the other of the plunger and locking element may include multiple second engagement elements, with each second engagement element being mutually engageable with a respective one of the first engagement elements. This arrangement provides more than one means of guiding the axial movement of the plunger to its deployed position which can increase the accuracy and reliability of the first and second engagement elements. Moreover this arrangement provides more than one means of locking the plunger in its deployed position which allows for a more reliable and sturdy lock of the plunger's position.

The or each first engagement element may be or may include a guide slot arranged to receive the corresponding retention formation to guide the axial movement of the plunger from its undeployed position to its deployed position. Such an arrangement provides a simple and reliable means for guiding the axial movement of the plunger. The guide slot may be a recess formed on or within the one of the plunger and locking element. The guide slot may instead be an aperture extending through the one of the plunger and locking element.

The or each first engagement element may be shaped to cause the plunger to rotate about its longitudinal axis during the axial movement of the plunger from its undeployed position to its deployed position. More specifically the or each first engagement element may extend helically along the axial length of the one of the plunger and locking element.

Shaping the or each first engagement element to cause rotation of the plunger about its longitudinal axis during axial movement of the plunger to its deployed position means that the plunger is readily moved to and locked in the deployed position in a single movement of the plunger from its undeployed position.

In contrast, if the or each first engagement element only extends linearly along the axial length of the one of the plunger and locking element, it may be necessary to initially move the plunger from its undeployed position using a linear movement in the first axial direction, before rotating the plunger or locking element to enable the or each detent formation to locate the corresponding retention formation.

Moreover the or each first engagement element extending helically along the axial length of the one of the plunger and locking element provides a degree of resistance to the axial movement of the plunger in the second axial direction due to the helical shape of the or each first engagement element.

The detent and retention formations may be arranged to permit further axial movement of the plunger in the first axial direction when the plunger is in its deployed position. Such an arrangement of the detent and retention formations permits the plunger to axially move in the first axial direction beyond the deployed position, should it be required to do so, whilst still preventing the axial movement of the plunger in the second axial direction.

The or each first engagement element may include an additional detent formation, the additional detent formation of the or each first engagement element arranged to locate the corresponding retention formation so as to prevent axial movement of the plunger in the second axial direction when the plunger is in a further deployed position that is offset axially from its deployed position.

Having an additional detent formation arranged in this manner provides a means of locking the plunger in a further deployed position which is axially located beyond the deployed position. In this way the plunger can be deployed and locked in multiple positions relative to the locking element, with each position being selected depending on the requirements of the locking device.

For example, when the plunger is capable of being moved axially in the first axial direction by a biasing element, the biasing element may be configured so that the lack of an opposing force acting on the plunger in the second axial direction allows the biasing element to move the plunger in the first axial direction to the further deployed position as defined by the additional detent formation. However, if there is an opposing force acting on the plunger in the second axial direction, the biasing element may then be prevented from moving the plunger to the further deployed position but instead may be limited to moving the plunger to the deployed position defined by the detent formation. In this way the provision of multiple detent formations caters for a range of opposing forces acting on the plunger in the second axial direction by enabling the locking of the plunger in multiple deployed positions.

Furthermore the provision of the additional detent formation allows the plunger to be manually moved, e.g. by an operator, to its further deployed position, which may be desirable to improve the plunger's engagement of the valve.

In such embodiments the or each first engagement element may include a plurality of additional detent formations. Having a plurality of additional detent formations allows the plunger to be deployed to and locked in multiple further deployed positions, thus allowing the locking device to be implemented in a wider range of applications.

Optionally the locking element may be arranged on or may form part of a collar that partially or wholly surrounds the plunger. This allows the collar to provide the plunger with structural support. In addition the shape of the collar permits the corresponding engagement elements to be spaced around the collar so as to surround the plunger to provide a more uniform engagement between the plunger and locking element.

The locking device may further include a plunger housing to house at least a portion of the plunger. The locking device may further include a biasing element housing to house the biasing element. This provides a degree of protection to at least a portion of the plunger and/or to the biasing element. Moreover the plunger housing and/or the biasing element housing may be configured to provide a means for securing the locking device to a support surface. In addition the plunger housing and the biasing element housing may be integral to one another, thereby reducing the number of parts of the locking device.

The valve assembly may be installed in or form part of any type of fluid conduit that is capable of transferring flowable material, e.g. water, oil, liquefied natural gas, and so on. In use, the valve opens and closes to selectively allow and prevent the flowable material from flowing through the hollow bore and therefore along the fluid conduit, thus selectively controlling the flow of flowable material along the fluid conduit.

When the valve is in the valve closed position, it may experience a force that tends to cause the valve to open, which in turn would cause leakage of the flowable material through the valve. The force may arise as a result of direct impact from a flow of fluid against the valve and/or a change in pressure in fluid behind the closed valve causing a suction effect. By virtue of the locking element engaging the plunger in its deployed position to prevent its movement in the second axial direction, the plunger is able to provide mechanical support to the valve and thereby hold the valve in the valve closed position against the force that is trying to open the valve.

Alternatively, or in addition, the valve may experience a fault. The fault may relate to a failure of a biasing element that normally holds the valve in the valve closed position, where the failed biasing element is no longer able to hold the valve in its closed position. Under such circumstances, by virtue of the locking element engaging the plunger in its deployed position to prevent its movement in the second axial direction, the plunger is able to continue holding the valve in the valve closed position when the valve experiences a fault, thus preventing leakage of the flowable material.

The locking device may be housed within the assembly housing, for example in a wall of the assembly housing. Housing the locking device in a wall of the assembly housing means that it does not disturb a flowable material flowing in use through the hollow bore.

In a preferred embodiment of the invention, the valve may be a PETAL VALVE^{™} valve.

It will be understood that a PETAL VALVE^{™} valve is one which includes a plurality of petal elements, each of which is pivotally mounted for movement between a fully retracted position, which corresponds to a valve open position, and a fully extended position, which corresponds to a valve closed position. In their fully extended position, all the petal elements abut one another to form a cone which normally faces the direction of flow of the flowable material along a fluid conduit. The apex of the cone defines a meeting point for all the petal elements when the PETAL VALVE^{™} valve is in the valve closed position.

Preferably the valve assembly includes a plurality of locking devices, and the PETAL VALVE^{™} valve includes a plurality of petal elements, wherein the plunger of each locking device in its deployed position engages a respective petal element so as to hold the PETAL VALVE^{™} valve in the valve closed position.

According to a second aspect of the invention, there is provided a pipeline coupling, for use in a fluid conduit, comprising the valve assembly according to the first aspect of the invention or any one of its embodiments.

The features and advantages of the valve assembly of the first aspect of the invention and its embodiments apply mutatis mutandis to the pipeline coupling of the third aspect of the invention.

Examples of pipeline couplings includes a breakaway coupling (such as a marine breakaway coupling) and a release coupling (such as an emergency release coupling).

Pipeline couplings are used in situations where a fluid conduit may be exposed to a tensile loading which, in the absence of a pipeline coupling, could cause the fluid conduit to fracture. Typically such a fluid conduit may be one used for carrying material between two locations, e.g. between ships or between a ship and a dock. If such a fracture occurs, the material being conveyed along the fluid conduit flows freely out of the fractured ends of the fluid conduit. This can cause significant spillage that is expensive to clear and may be environmentally undesirable. The presence of a pipeline coupling enables the fluid conduit to fracture at a specified location (i.e. at the coupling) and for spillage to be avoided by the valve moving to the valve closed position to close the hollow bore of the fluid conduit when the fluid conduit fractures.

It is, therefore, desirable to provide reliable mechanical support to the valve in its closed position to prevent the valve from leaking, i.e. either due to a force being applied to the valve or by a fault in the valve, since such leakage would result in the flowable material spilling out of the fractured fluid conduit and into, for example, the sea.

There is provided a use of a pipeline coupling as a breakaway coupling or a release coupling, wherein the pipeline coupling is in accordance with the second aspect of the invention or any one of its embodiments.

The features and advantages of the pipeline coupling of the second aspect of the invention and its embodiments apply mutatis mutandis to the use of the pipeline coupling as a breakaway coupling or a release coupling.

It will be appreciated that the valve assembly of the invention are not limited to use in pipeline couplings, but are also applicable to other devices that are used in a fluid conduit.

It will be understood that the use of the terms "first" and "second" and the like in the patent specification is merely intended to help distinguish between similar features (e.g. the first and second axial directions, the first and second engagement elements), and is not intended to indicate the relative importance of one feature over another feature.

A preferred embodiment of the invention will now be described, by way of a non-limiting example, with reference to the accompanying drawings in which:
Figures 1a and 1b shows a pipeline coupling according to a first embodiment of the invention;
Figure 2 shows an exploded view of a locking device;
Figure 3 shows an exploded view of another locking device;
Figure 4 shows a cross-sectional view of the locking device of Figure 2 when the plunger is in its undeployed position;
Figure 5 shows a cross-sectional view of the locking device of Figure 2 when the plunger is in its deployed position;
Figure 6 shows a cross-sectional view of the shut-off valve housing of the pipeline coupling of Figure 1 with plungers in their undeployed positions;
Figure 7 shows a cross-sectional view of the shut-off valve housing of the pipeline coupling of Figure 1 with plungers in their deployed positions;
Figure 8 and 9 show first and second ratchet members of the locking device of Figure 2;
Figure 10 shows a locking device of a pipeline coupling according to a second embodiment of the invention;
Figure 11 shows a cross-sectional view of the locking device of Figure 10; and
Figure 12 shows a plunger of the locking device of Figure 10.

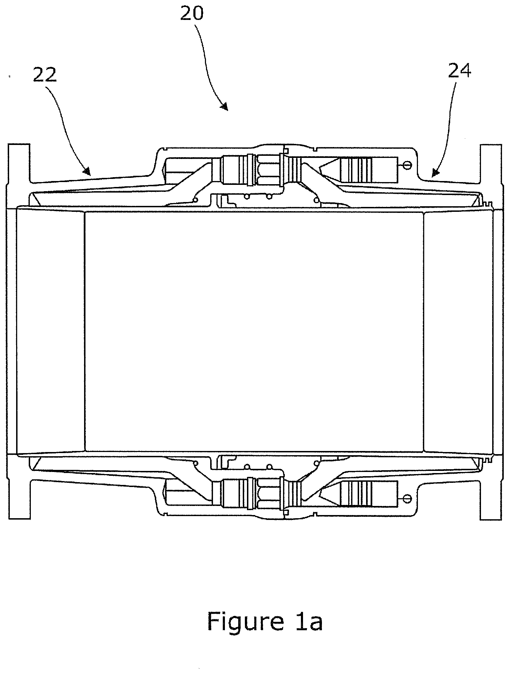

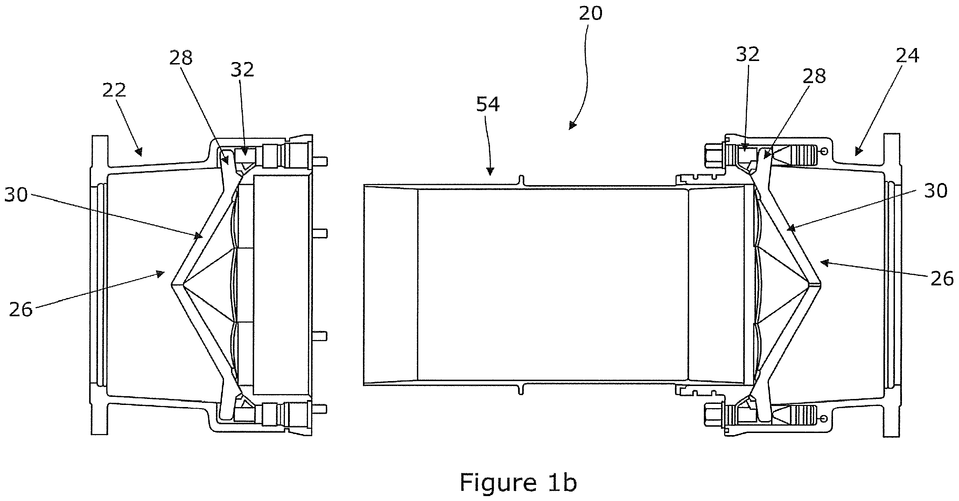

A pipeline coupling according to a first embodiment of the invention is shown in Figures 1a and 1b, and is designated generally by the reference numeral 20. The pipeline coupling 20 is preferably for use as a breakaway coupling (such as a marine breakaway coupling) or a release coupling (such as an emergency release coupling).

The pipeline coupling 20 comprises a pair of shut-off valve housings 22,24 directly secured to each other by means of a plurality of fastening arrangements, as shown in Figure 1a. The shut-off valve housings 22,24 define a hollow bore along which flowable material may flow. In use, the shut-off valve housings 22,24 are respectively coupled to first and second pipeline portions such that securing the shut-off valve housings 22,24 to each other interconnects the first and second pipeline portions to form a pipeline.

The fastening arrangements may be configured to permit controlled separation of the shut-off valve housings 22,24 from each other on operation of an actuator operably engaged with each fastening arrangement.

Alternatively the fastening arrangements may be configured to each include a respective frangible element such as a breakstud, which is formed to include a weakened portion that breaks on exposure to a tensile load exceeding a predetermined limit. Such a tensile load may be applied to the pipeline as a result of unexpected movement of objects connected to the ends of the pipeline or due to excessive pressure within the pipeline. The use of a respective breakstud with the weakened portion permits the automatic separation of the shut-off valve housings 22,24 in response to the tensile load exceeding a predetermined limit. More particularly, upon application of such a tensile load, each breakstud breaks at its weakest section, thus permitting the shut-off valve housings 22,24 to separate from each other. Such automatic separation can be carried out independently of any control and/or monitoring system.

A respective PETAL VALVE^{™} valve 26 is located within the hollow bore of each shut-off valve housing 22,24, as shown in Figure 1b. Each PETAL VALVE^{™} valve 26 includes a plurality of petal elements, each of which has a pivot portion 28 and a valve portion 30. It will be understood that each PETAL VALVE^{™} valve 26 may include any number of petal elements. The plurality of petal elements may be identical in shape and/or size, or may differ from each other in terms of their shapes and/or sizes.

The valve portion 30 of each petal element is pivotally moveable relative to the hollow bore via the respective pivot portion 28 that is pivotally mounted to the wall of the respective shut-off valve housing 22,24. Each petal element is moveable between a fully retracted position which corresponds to a valve open position of the corresponding PETAL VALVE^{™} valve 26, and a fully extended position which corresponds to a valve closed position of the corresponding PETAL VALVE^{™} valve 26. In the valve closed position of each PETAL VALVE^{™} valve 26, all the valve portions 30 abut one another to form a cone which faces or opposes the direction of flow of the flowable material along the pipeline. For each PETAL VALVE^{™} valve 26, the apex of the cone defines a meeting point for all the petal elements when the PETAL VALVE^{™} valve 26 is in the valve closed position. It will be appreciated that the edge of one or more of the petal elements may optionally include a seal formed thereon.

Each PETAL VALVE^{™} valve 26 when in the valve open position opens the hollow bore of the corresponding shut-off valve housing 22,24 so as to allow flowable material to flow along the hollow bore. Each PETAL VALVE^{™} valve 26 when in the valve closed position closes the hollow bore of the corresponding shut-off valve housing 22,24 so as to prevent flowable material from flowing along the hollow bore.

Each shut-off valve housing 22,24 includes a plurality of locking devices 32. In each shut-off valve housing 22,24, the number of locking devices 32 corresponds to the number of petal elements. Each locking device 32 is housed within a wall of the corresponding shut-off valve housing 22,24.

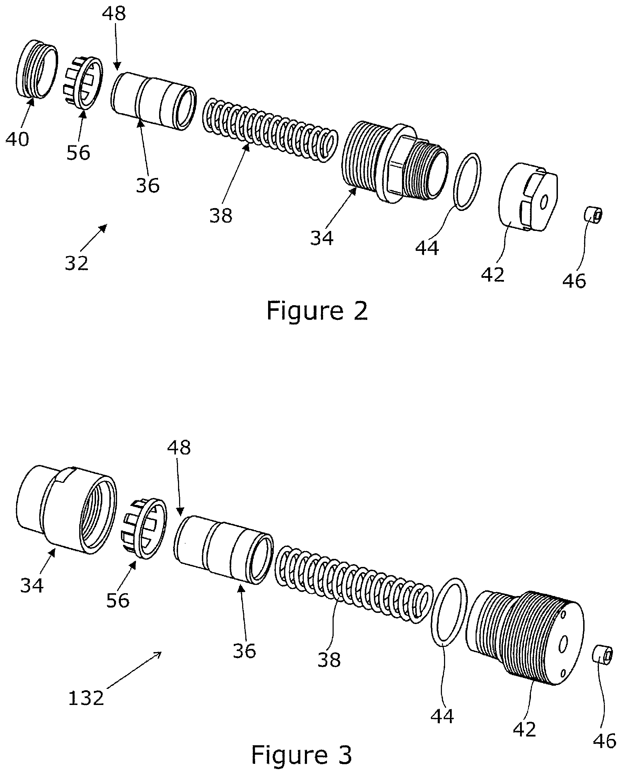

Figure 2 shows an exploded view of each locking device 32. Each locking device 32 includes a device casing 34, a plunger 36 and a spring 38. Each device casing 34 includes a retaining ring 40, an endcap 42, a seal 44 for the endcap 42, and a plug 46 for the endcap 42. Figure 3 shows an exploded view of an alternative locking device 132 with the same features except for the retaining ring 40.

In the embodiment shown the plunger 36 is an elongate solid and substantially cylindrical member, but may take a different form in other embodiments. The plunger 36 may be formed from a metallic material, e.g. steel, or may be formed from plastic.

The operating principle is the same for the locking devices 32,132 shown in Figures 2 and 3. For clarity purposes, the following description will be based on the locking device 32 of Figure 2.

The plunger 36 is housed within the device casing 34 such that it can move axially relative to the device casing 34. The spring 38 is partly housed within the plunger 36 such that one end of the spring 38 contacts an inner wall of the device casing 34 while the other end of the spring 38 extends out of the plunger 36 to contact an inner wall of the device casing 34.

Each locking device 32 is configured so that the plunger 36 is completely housed within the device casing 34 and the spring 38 is compressed when the plunger 36 is in a retracted position (i.e. an undeployed position), and so that the plunger 36 extends partly out of the device casing 34 and the spring 38 is uncompressed or minimally compressed when the plunger 36 is in an extended position (i.e. deployed position). The direction of travel from the undeployed position to the deployed position is referred to as the first axial direction 50, while the direction of travel from the deployed position to the undeployed position is referred to as the second axial direction 52.

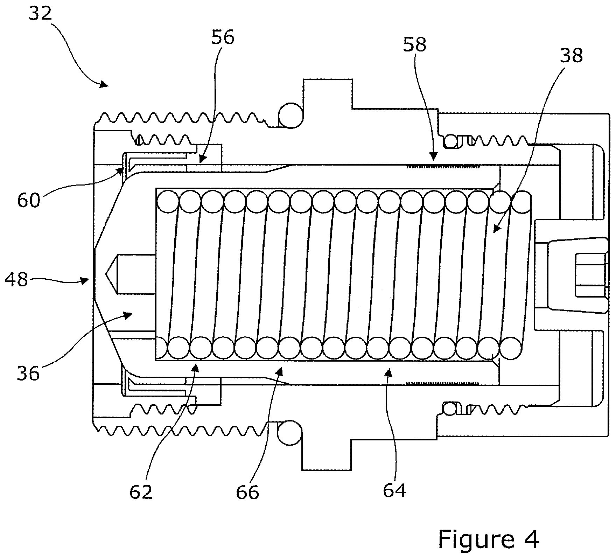

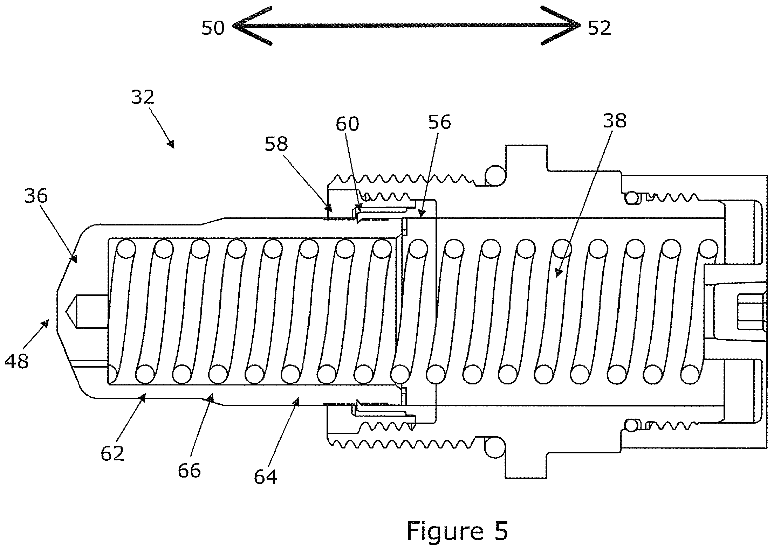

Figure 4 shows a cross-sectional view of the locking device 32 when the plunger 36 is in its undeployed position. Figure 5 shows a cross-sectional view of the same locking device 32 when the plunger 36 is in its deployed position.

The pivot portion 28 of each petal element also includes a heel portion. The heel portion of each petal element lies at an opposite end to the meeting point of the petal elements when the corresponding PETAL VALVE^{™} valve 26 is in the valve closed position. The heel portion of each petal element is arranged to extend across and abut an abutment face 48 of the plunger 36 of a respective locking device 32.

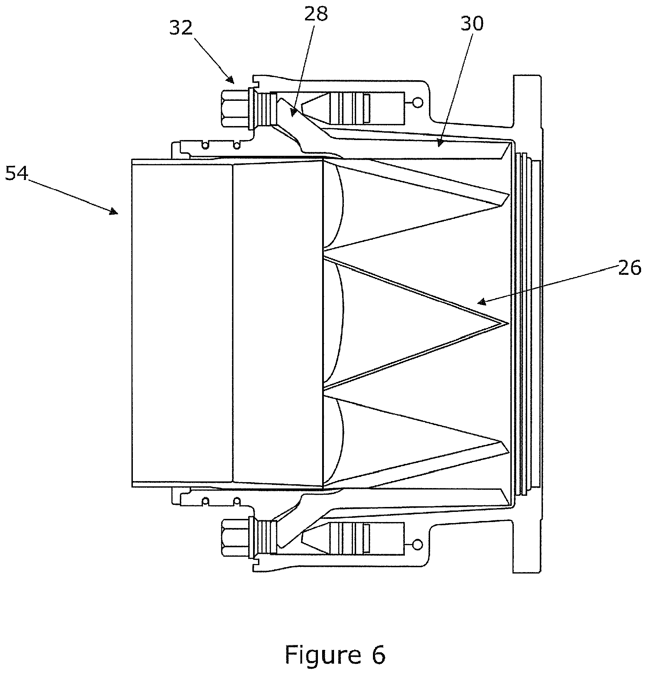

The pipeline coupling 20 further includes an internal sleeve 54 arranged within the shut-off valve housings 22,24. When the shut-off valve housings 22,24 are secured to each other as shown in Figure 1a, the internal sleeve 54 is arranged to push against both PETAL VALVE^{™} valves 26 so that their petal elements are in their fully retracted positions and the petals valves are in their valve open positions. At this stage the plungers 36 are in their undeployed positions, as shown in Figure 6 which shows a cross-sectional view of the shut-off valve housing 22,24.

When the shut-off valve housings 22,24 separate from each other as shown in Figure 1b, the internal sleeve 54 is arranged to move away from the PETAL VALVE^{™} valves 26 so that their petal elements are allowed to move from their fully retracted positions to their fully extended positions in order to close the PETAL VALVE^{™} valves 26. In each locking device 32, the spring 38 applies a biasing force to the plunger 36 in the first axial direction 50 such that the plunger 36 moves in the first axial direction 50 to the deployed position to push against the corresponding heel portion, and thereby cause the corresponding valve portion 30 to pivotally move relative to the hollow bore so that the corresponding petal element is moved towards its fully extended position.

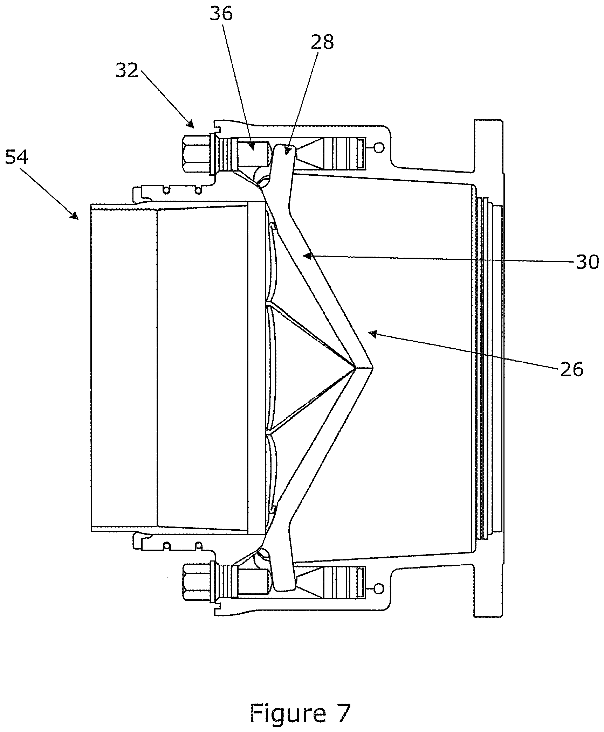

Figure 7 shows a cross-sectional view of the shut-off valve housing 22,24 when the plungers 36 are in their deployed positions. At its deployed position each plunger 36, with the aid of the respective spring 38, pushes against the respective heel portion to hold the respective petal element in its fully extended positions. Thus, when all of the plungers 36 are in their deployed positions, all of the corresponding petal elements are held in their fully extended positions so that the PETAL VALVE^{™} valve 26 is in its valve closed position. In this manner the separation of the shut-off valve housings 22,24 from each other triggers the movement of the PETAL VALVE^{™} valves 26 to their valve closed positions to shut off the respective hollow bores of the shut-off valve housings 22,24.

After the shut-off valve housings 22,24 are separated and the PETAL VALVE^{™} valves 26 are closed, there may be a considerable time delay before the pipeline is flushed and removed from service. During the delay, the upstream pipeline portion remains filled with fluid and may be left streaming in position. The shut-off valve housing 22,24 coupled to the free end of the streaming pipeline portion will be subjected to an increased range of movement and be more susceptible to wave motion in comparison to when the shut-off valve housings 22,24 are secured together.

The increased range of movement means that the free end of the streaming pipeline portion could be lifted to a greater height than the rest of the pipeline portion, which has the effect of reducing the pressure in the fluid behind the closed PETAL VALVE^{™} valve 26. This in turn could create a suction effect that leads to a force trying to open the PETAL VALVE^{™} valve 26. In addition, by virtue of the separation of the shut-off valve housings 22,24, each closed PETAL VALVE^{™} valve 26 is exposed to a force resulting from direct impact from waves, which could push open the closed PETAL VALVE^{™} valves 26.

Depending on the magnitude of the forces exerted on the PETAL VALVE^{™} valves 26, it may be that the associated plungers 36 are incapable of preventing the forces from causing the PETAL VALVE^{™} valves 26 to open. This is because, when a given plunger 36 is in its deployed position, the corresponding spring 38 is either in a slightly compressed state to provide a minimal biasing force to the plunger 36, or in an uncompressed state such that it does not apply a biasing force to the plunger 36. Furthermore the springs 38 must be designed to allow the plungers 36 to move in a second axial direction 52, which is opposite to the first axial direction 50, in order to return to their undeployed positions to permit reopening of the PETAL VALVE^{™} valves 26.

It is therefore important to ensure that the PETAL VALVE^{™} valves 26 stay closed even when exposed to additional forces as a result of the aforementioned conditions.

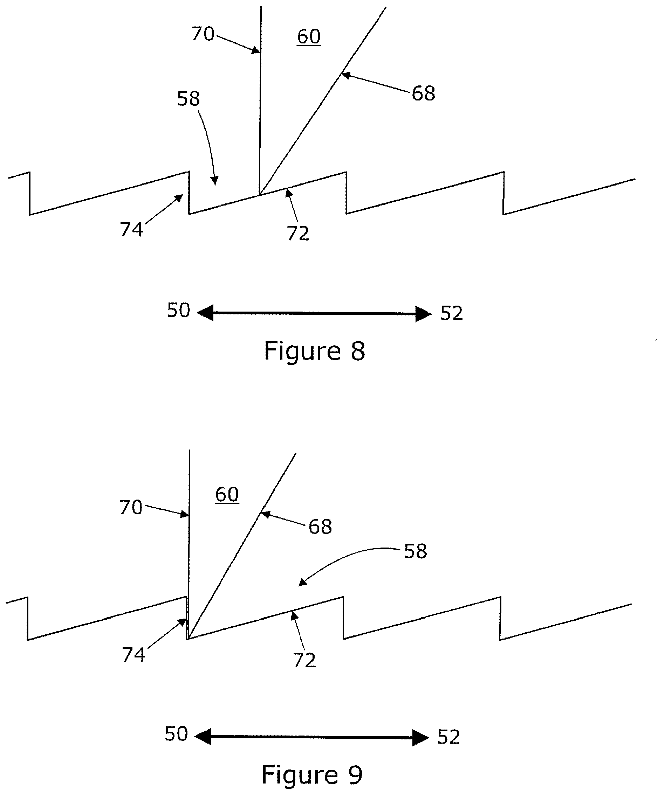

Each locking device 32 further includes a locking element 56. The plunger 36 and the locking element 56 are configured to include first and second ratchet members respectively. Figures 8 and 9 show the structure of the first and second ratchet members.

The plunger 36 includes first and second plunger portions 62,64. The first plunger portion 62 is narrower in diameter than the second plunger portion 64. The first and second plunger portions 62,64 are formed at opposite ends of the plunger 36 such that the first plunger portion 62 is formed at the end of the plunger 36 that defines the abutment face 48 while the second plunger portion 64 is formed at the opposite end of the plunger 36 away from the abutment face 48. The plunger 36 further includes a tapered plunger portion 66 that interconnects the first and second plunger portions 62,64.

The first ratchet member includes a plurality of grooves 58. Each groove 58 is formed circumferentially around the exterior surface of the second plunger portion 64 so as to form a series of circumferential grooves 58 that are successively offset along the length of the second plunger portion 64. Each groove 58 has an asymmetrical profile having first and second edges 68,70.

The second ratchet member includes a plurality of teeth 60 arranged circumferentially about a ring body. The ring body is arranged in the device casing 34 so that the plunger 36 extends through an aperture defined by the ring body. Each tooth 60 is formed on the free end of an elastic cantilever member that extends from the ring body, the plurality of teeth 60 are arranged to surround the plunger 36, and each tooth 60 extends radially inwards towards the plunger 36. Each tooth 60 has an asymmetrical profile having first and second edges 72,74.

The asymmetrical profile of each tooth 60 and each groove 58 is shaped to permit relative movement between the teeth 60 and grooves 58 in one direction and prevent relative movement between the teeth 60 and grooves 58 in the opposite direction. In particular the first edge 68,72 of each tooth 60 and groove 58 is angled to the direction of axial movement of the plunger 36, and the second edge 70,74 of each tooth 60 and groove 58 is perpendicular or substantially perpendicular to the direction of axial movement of the plunger 36.

When a given plunger 36 is in its undeployed position, the ring body surrounds the first plunger portion 62. The diameter of the first plunger portion 62 is defined so that the teeth 60 of the second ratchet member do not contact the plunger 36, i.e. the teeth 60 are spaced apart from the plunger 36.

As the plunger 36 moves in the first axial direction 50, the teeth 60 pass over the tapered plunger portion 66. The diameter of the tapered plunger portion 66 is defined so that the tapered plunger portion 66 pushes against the passing teeth 60, thereby causing the teeth 60 to elastically deflect outwards and apply a gripping force to the plunger 36.

Further movement of the plunger 36 in the first axial direction 50 causes the teeth 60 to pass from the tapered plunger portion 66 to the second plunger portion 64 where it engages the plurality of grooves 58 formed on the exterior surface of the second plunger portion 64. The elastic deflection of each tooth 60 allows it to engage in each groove 58 in turn. As the plunger 36 moves in the first axial direction 50, the first edge 68 of each tooth 60 engages the first edge 72 of one of the grooves 58 such that the tooth 60 can readily slide over the first edge 72 to move from the groove 58 to the next groove 58, as shown in Figure 8.

The plunger 36 will continue to move in the first axial direction 50 as long as the spring force exceeds a return force acting on the abutment face 48 of the plunger 36, until the plunger 36 reaches its deployed position.

As mentioned above an additional force may be exerted on the closed PETAL VALVE^{™} valves 26 such that the PETAL VALVE^{™} valves 26 may be forced open.

When such an additional force is exerted on the closed PETAL VALVE^{™} valve 26 such that the return force acting on the abutment face 48 of each plunger 36 overcomes the corresponding spring force, the second edge 70 of each tooth 60 engages the second edge 74 of one of the grooves 58 such that the engagement of the two perpendicular edges 70,74 prevents the plunger 36 from being pushed in the second axial direction 52 back into the device casing 34, as shown in Figure 9. This in turns locks each plunger 36 in its deployed position, which allows each PETAL VALVE^{™} valve 26 to remain in its valve closed position until the intervention of the operator to disengage the first and second ratchet members and reopen the PETAL VALVE^{™} valves 26.

The inclusion of the locking elements 56 in the locking devices 32 of the pipeline coupling 20 therefore provides a passive mechanism that enables the positive locking of the plungers 36 in their deployed positions to secure the PETAL VALVE^{™} valves 26 in their valve closed positions, thus preventing leakage even when the PETAL VALVE^{™} valves 26 are exposed to additional forces.

In addition the locking devices 32 of the invention can be installed or retrofitted in existing pipeline couplings without requiring substantial modification of the shut-off valve housings 22,24 and the PETAL VALVE^{™} valves 26.

Moreover the inclusion of a plurality of offset grooves 58 in the first ratchet member permits the plunger 36 to be moved in the first axial direction 50 from its undeployed position to a plurality of deployed positions, and permits the locking device 32 to engage the plunger 36 in a plurality of deployed positions so as to prevent movement of the plunger 36 in the second axial direction 52. This beneficially compensates for differences between PETAL VALVE^{™} valves 26 which may arise as a result of, for example, manufacturing variation and/or wear and tear.

It will be appreciated that the configuration of the first and second ratchet members shown in Figure 2 is merely intended to demonstrate the working principle of the invention, and the configuration of the first and second ratchet member may vary so long as the first and second ratchet members are mutually engageable to permit relative movement between the first and second ratchet members in one direction and prevent relative movement between the first and second ratchet members in the opposite direction.

It will be also appreciated that the above described operation of the locking devices 32 to move all of the petal elements to their fully extended positions and lock the corresponding plungers 36 in their deployed positions applies mutatis mutandis to the individual operation of one or some of the locking devices 32 to move one or some of the petal elements to their fully extended positions and lock the corresponding plunger(s) 36 in the deployed position(s) to, for example, regulate pressure in the pipeline while one or more other petal elements remain fully retracted.

It will be further appreciated that the above described operation of the locking devices 32 to move each PETAL VALVE^{™} valve 26 to its valve closed position and secure each PETAL VALVE^{™} valve 26 in its valve closed position applies mutatis mutandis to the use of the locking devices with other types of valves for use in fluid conduits.

In other embodiments of the invention, it is envisaged that the pipeline coupling may include only one of the PETAL VALVE^{™} valves, with the single PETAL VALVE^{™} valve being located in one of the shut-off valve housings.

In still other embodiments of the invention, it is envisaged that each spring may be replaced by another type of biasing element capable of applying a biasing force to the plunger in the first axial direction.

There is provided a pipeline coupling according to a second embodiment of the invention.

The pipeline coupling of the second embodiment of the invention is similar in structure and operation to the pipeline coupling of the first embodiment of the invention, except that the pipeline coupling of the second embodiment of the invention includes a plurality of locking devices 232 instead of the locking devices 32,132 shown in Figures 2 and 3.

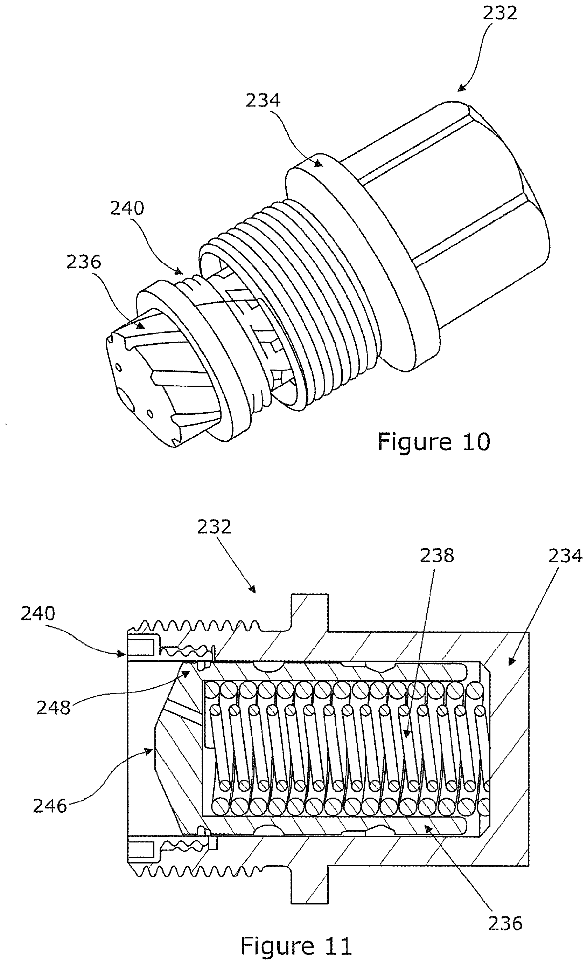

Figures 10 to 12 show schematically the configuration of each locking device 232. Each locking device 232 is similar in structure and operation to each of the other locking devices 32,132, but also differ in structure and operation to each of the other locking devices 32,132 as follows.

Each locking device 232 includes a device casing 234, a plunger 236, a spring 238, and a collar 240.

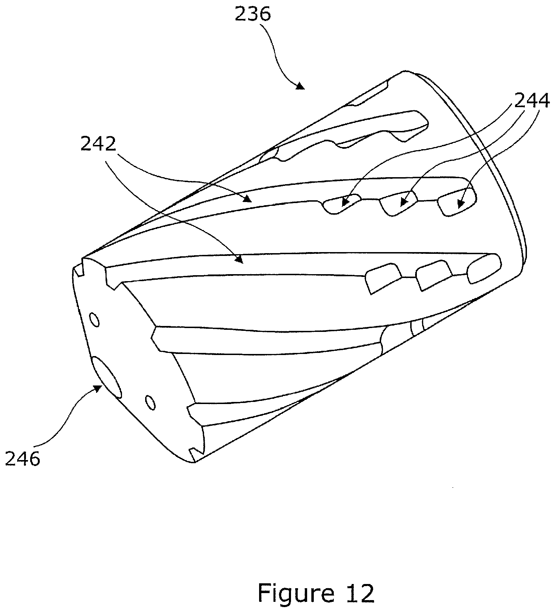

The plunger 236 includes a plurality of guide slots 242, each of which extends helically along an axial length of the plunger 236 so as to extend partially around the circumference of the plunger 236, as shown in more detail in Figure 12. It is envisaged that, in other embodiments of the invention, each guide slot 242 may extend helically so as to extend fully around the circumference of the plunger 236. It is further envisaged that, in still other embodiments of the invention, each guide slot 242 may extend axially and circumferentially along the entire axial length of the plunger 236.

Referring to each guide slot 242, the plunger 236 further includes a plurality of detent slots 244 arranged to extend laterally from the guide slot 242 and be successively offset along the length of the guide slot 242. Each detent slot 244 is shaped so that each detent slot 244 in combination with the corresponding guide slot 242 are shaped to resemble the letter J, and so together form a so-called "J-slot". It will be understood that each detent slot 244 may take on a different shape from what is shown in Figure 12.

Each of the guide and detent slots 244 is in the form of a recess in an outer surface of the plunger 236. In other embodiments of the invention, each guide slot 242 and/or each detent slot 244 may instead be in the form of an aperture that extends through the plunger 236.

The plunger 236 and collar 240 are housed within the device casing 234 so that the plunger 236 is surrounded by the collar 240 and so that axial movement of the plunger 236 in the first axial direction causes an abutment face 246 of the plunger 236 to move away from the collar 240.

In each locking device 232, the collar 240 and device casing 234 are unsealed relative to one another. Moreover each plunger 236 includes a plurality of pressure compensation holes located on the abutment face 246 of the plunger 236. The pressure compensation holes provide a means of uniform release and intake of a flowable material during the operation of the locking device 232, thus preventing a hydraulic/pneumatic lock from occurring.

The abutment face 246 of each plunger 236 is dome-shaped. This provides a rolling movement of the abutment face 246 over the heel portion of the corresponding petal element during its pivotal movement. The shape of the abutment face 246 of each plunger 236 may vary depending on the shape and operation of the corresponding valve. It is envisaged that, in other embodiments of the invention, the abutment face 246 of each plunger 236 may be conical or flat.

The collar 240 includes a plurality of retention formations 248, each of which is received by a respective guide slot 242 when the plunger 236 is in its undeployed position. Each retention formation 248 in this embodiment is in the form of a protruding element, for example a dog-tooth, which protrudes from an inner surface of the collar 240. The retention formations 248 are spaced from one another around the inner surface of the collar 240. It is envisaged that, in other embodiments of the invention, each retention formation 248 may take another form that permits its engagement with a respective guide slot 242.

As the plunger 236 moves in the first axial direction, each retention formation 248 travels along the respective guide slot 242. The helical shape of the guide slots 242 causes the plunger 236 to rotate about its longitudinal axis during the axial movement of the plunger 236 in the first axial direction.

When the plunger 236 reaches its deployed position, the rotation of the plunger 236 about its longitudinal axis enables each retention formation 248 to slide from the respective guide slot 242 into an adjacent detent slot 244.

Each detent slot 244 then locates the corresponding retention formation 248 so as to prevent axial movement of the plunger 236 in the second axial direction. More specifically, each detent slot 244 is shaped to arrest axial movement of the plunger 236 in the second axial direction by way of a detent wall abutting the retention formation 248 if a force is applied on the plunger 236 in the second axial direction. In the embodiment shown, the detent wall is perpendicular or substantially perpendicular to the direction of axial movement of the plunger 236.

The detent slot 244 is also shaped to permit further axial movement of the plunger 236 in the first axial direction from its deployed position. More specifically, each detent slot 244 is shaped to include a slope extending from the bottom of its detent wall and towards the respective guide slot 242, where the slope of each detent slot 244 is parallel or substantially parallel to the direction of axial movement of the plunger 236. This permits each retention formation 248 to travel along the slope back into the respective guide slot 242 upon further axial movement of the plunger 236 in the first axial direction, so that each retention formation 248 can then travel further along the respective guide slot 242.

Further travel of each retention formation 248 along the respective guide slot 242 allows the selective location of each retention formation 248 in each of the other detent slots 244 located further along the respective guide slot 242. In this way the plunger 236 can be moved to further deployed positions offset axially from the first deployed position while also being prevented from moving in the second axial direction in each further deployed position.

The provision of a plurality of detent slots 244 extending from each guide slot 242 caters for a range of opposing forces acting on the plunger 236 in the second axial direction by enabling the locking of the plunger 236 in multiple deployed positions.

If there is no opposing force acting on the plunger 236 in the opposite direction of the biasing force applied by the spring 238, each retention formation 248 is permitted to travel along the respective guide slot 242 to be located in the detent slot 244 furthest along the guide slot 242. In this way the plunger 236 is locked in the deployed position as defined by the detent slot 244 furthest along the guide slot 242.

If there is an opposing force acting on the plunger 236 in the opposite direction of the biasing force applied by the spring 238, the strength of the opposing force may limit the movement of the plunger 236 in the first axial direction such that each retention formation 248 is prevented from travelling along the respective guide slot 242 to be located in the detent slot 244 furthest along the guide slot 242 but instead is limited to travelling along the respective guide slot 242 to be located in any one of the other detent slots 244.

If the opposing force acting on the plunger 236 is removed or sufficiently reduced, each retention formation 248 can then travel along the respective guide slot 242 to be located in the detent slot 244 furthest along the guide slot 242 so as to change the deployed position of the plunger 236.

Alternatively each locking device 232 may be actuated manually by an operator so as to extend the plunger 236 to a selected deployed position.

Once it is no longer necessary to hold each PETAL VALVE^{™} valve 26 in its valve closed position (for example, due to the shut-off valve housings 22,24 being reconnected to each other), each locking device 232 can be automatically or manually reset in order to reopen the PETAL VALVE^{™} valve 26. This is done by rotating the plunger 236 of each locking device 232 in order to release each retention formation 248 from the respective detent slot 244. Each plunger 236 is then forced to move in the second axial direction by way of each retention formation 248 travelling back along the respective guide slot 242. This releases the hold on the respective petal element and thereby permits each petal element to return towards its fully retracted position. The spring 238 is then returned to its compressed state.

## Claims

1. A valve assembly, for use in a fluid conduit, the the valve assembly comprising:
a locking device (32, 132, 232) including:
a plunger (36, 236) for engaging a valve (26) in the fluid conduit, the plunger (36, 236) arranged to be moveable in a first axial direction (50) from an undeployed position to a deployed position, the plunger (36, 236) when in its deployed position configured for holding the valve (26) in a valve closed position; and
a locking element (56) arranged to engage the plunger (36, 236) in its deployed position so as to prevent movement of the plunger (36, 236) in a second axial direction (52), the second axial direction (52) being opposite to the first axial direction (50),
wherein the valve assembly further includes:
an assembly housing (22, 24) defining a hollow bore along which flowable material may flow; and
a valve (26) moveable between a valve open position and a valve closed position, the valve (26) when in the valve open position opening the hollow bore so as to allow flowable material to flow along the hollow bore, the valve (26) when in the valve closed position closing the hollow bore so as to prevent flowable material from flowing along the hollow bore,
wherein the plunger (36, 236) in its deployed position engages the valve (26) so as to hold the valve (26) in the valve closed position,
wherein the valve (26) includes a pivot portion (28), the pivot portion (28) being pivotally coupled to the assembly housing (22, 24), the valve (26) being moveable between the valve open position and the valve closed position upon pivotal movement of the pivot portion (28), wherein the plunger (36, 236) in its deployed position engages the pivot portion (28) so as to hold the valve (26) in the valve closed position.

2. A valve assembly according to Claim 1 wherein the locking device (32, 132, 232) further includes a biasing element configured to apply a biasing force to the plunger (36, 236) in the first axial direction (50), optionally wherein the biasing element is or includes a resilient biasing member, and further optionally wherein the resilient biasing member is a spring (38, 238).

3. A valve assembly according to any one of the preceding claims wherein one of the plunger (36, 236) and locking element (56) includes at least one first engagement element, the other of the plunger (36, 236) and locking element (56) includes at least one second engagement element, and the or each first engagement element is arranged to engage the or the respective second engagement element when the locking element (56) is engaged with the plunger (36, 236) in its deployed position so as to prevent movement of the plunger (36, 236) in the second axial direction (52).

4. A valve assembly according to any one of the preceding claims wherein the locking device (32, 132) includes first and second ratchet members (58, 60), the first ratchet member (58) arranged on or forming part of the plunger (36), the second ratchet member (60) arranged on or forming part of the locking element (56), the first and second ratchet members (58, 60) arranged so that the first and second ratchet members (58, 60) are mutually engageable to permit relative movement between the first and second ratchet members (58, 60) in one direction and prevent relative movement between the first and second ratchet members (58, 60) in the opposite direction so as to permit movement of the plunger (36) in the first axial direction (50) and prevent movement of the plunger (36) in the second axial direction (52).

5. A valve assembly according to Claim 4 wherein the first and second ratchet members (58, 60) are arranged so that the first and second ratchet members (58, 60) are mutually engaged when the plunger (36) is in its deployed position, and/or wherein one of the first and second ratchet members (58, 60) includes at least one protruding element (60), the or each protruding element having an asymmetrical profile.

6. A valve assembly according to any one of the preceding claims wherein the locking element (56) is arranged to be spaced apart from the plunger (36) when the plunger (36) is in its undeployed position, optionally wherein the plunger (36) is shaped to define a gap between the plunger (36) and locking element (56) when the plunger (36) is in its undeployed position and to permit engagement between the plunger (36) and locking element (56) when the plunger (36) is in its deployed position.

7. A valve assembly according to any one of the preceding claims wherein the locking element (56) is elastically deflectable.

8. A valve assembly according to Claim 3 wherein the or each first engagement element extends along an axial length of the one of the plunger (236) and locking element (56), the or each second engagement element includes a retention formation, the first and second engagement elements are mutually engageable with one another to guide the axial movement of the plunger (236) from its undeployed position to its deployed position, wherein the or each first engagement element further includes a detent formation, the detent formation of the or each first engagement element arranged to locate the retention formation of the or the respective second engagement element when the plunger (236) is in its deployed position so as to prevent movement of the plunger (236) in the second axial direction (52).

9. A valve assembly according to Claim 8 wherein the or each first engagement element is or includes a guide slot (242) arranged to receive the corresponding retention formation to guide the axial movement of the plunger (236) from its undeployed position to its deployed position.

10. A valve assembly according to Claim 8 or Claim 9 wherein the or each first engagement element is shaped to cause the plunger (236) to rotate about its longitudinal axis during the axial movement of the plunger (236) from its undeployed position to its deployed position.

11. A valve assembly according to any one of Claims 8 to 10 wherein the detent and retention formations are arranged to permit further axial movement of the plunger (236) in the first axial direction (50) when the plunger (236) is in its deployed position.

12. A valve assembly according to any one of Claims 8 to 11 wherein the or each first engagement element includes an additional detent formation, the additional detent formation of the or each first engagement element arranged to locate the corresponding retention formation so as to prevent axial movement of the plunger (236) in the second axial direction (52) when the plunger (236) is in a further deployed position that is offset axially from its deployed position.

13. A valve assembly according to any one of Claims 8 to 12 wherein the locking element (56) is arranged on or forms part of a collar (240) that partially or wholly surrounds the plunger (36, 236).

14. A valve assembly according to any one of the preceding claims wherein the valve assembly includes a plurality of locking devices (32, 132, 232), and the valve (26) includes a plurality of petal elements, wherein the plunger (36, 236) of each locking device (32, 132, 232) in its deployed position engages a respective petal element so as to hold the valve (26) in the valve closed position.

15. A pipeline coupling (20), for use in a fluid conduit, comprising the valve assembly according to any one of the preceding claims, optionally wherein the pipeline coupling is a breakaway coupling or a release coupling.

## Patentansprüche

1. Ventilanordnung zur Verwendung in einer Fluidleitung, wobei die Ventilanordnung Folgendes umfasst:
eine Verriegelungsvorrichtung (32, 132, 232), die Folgendes einschließt:
einen Kolben (36, 236) zum Ineingriffnehmen eines Ventils (26) in der Fluidleitung, wobei der Kolben (36, 236) angeordnet ist, um in einer ersten axialen Richtung (50) von einer nicht ausgefahrenen Position in eine ausgefahrene Position bewegbar zu sein, wobei der Kolben (36, 236), wenn in seiner ausgefahrenen Position, zum Halten des Ventils (26) in einer geschlossenen Ventilposition konfiguriert ist; und
ein Verriegelungselement (56), das angeordnet ist, um den Kolben (36, 236) in seiner ausgefahrenen Position in Eingriff zu nehmen, um eine Bewegung des Kolbens (36, 236) in einer zweiten axialen Richtung (52) zu verhindern, wobei die zweite axiale Richtung (52) entgegengesetzt zu der ersten axialen Richtung (50) ist,
wobei die Ventilanordnung ferner Folgendes einschließt:
ein Anordnungsgehäuse (22, 24), das eine hohle Bohrung definiert, entlang der fließfähiges Material fließen kann; und
ein Ventil (26), das zwischen einer geöffneten Ventilposition und einer geschlossenen Ventilposition bewegbar ist, wobei das Ventil (26), wenn in der geöffneten Ventilposition, die hohle Bohrung öffnet, um zu ermöglichen, dass fließfähiges Material entlang der hohlen Bohrung fließt, wobei das Ventil (26), wenn in der geschlossenen Ventilposition, die hohle Bohrung schließt, um zu verhindern, dass fließfähiges Material entlang der hohlen Bohrung fließt,
wobei der Kolben (36, 236) in seiner ausgefahrenen Position das Ventil (26) in Eingriff nimmt, um das Ventil (26) in der geschlossenen Ventilposition zu halten,
wobei das Ventil (26) einen Schwenkabschnitt (28) einschließt, wobei der Schwenkabschnitt (28) mit dem Anordnungsgehäuse (22, 24) schwenkbar gekoppelt ist, wobei das Ventil (26) zwischen der geöffneten Ventilposition und der geschlossenen Ventilposition bei einer Schwenkbewegung des Schwenkabschnitts (28) bewegbar ist, wobei der Kolben (36, 236) in seiner ausgefahrenen Position den Schwenkabschnitt (28) in Eingriff nimmt, um das Ventil (26) in der geschlossenen Ventilposition zu halten.

2. Ventilanordnung nach Anspruch 1, wobei die Verriegelungsvorrichtung (32, 132, 232) ferner ein Vorspannelement einschließt, das konfiguriert ist, um eine Vorspannkraft auf den Kolben (36, 236) in der ersten axialen Richtung (50) auszuüben, optional wobei das Vorspannenelement ein elastisches Vorspannelement ist oder einschließt, und ferner optional wobei das elastische Vorspannelement eine Feder (38, 238) ist.

3. Ventilanordnung nach einem der vorhergehenden Ansprüche, wobei der Kolben (36, 236) oder das Verriegelungselement (56) wenigstens ein erstes Eingriffselement einschließt, das andere des Kolbens (36, 236) und des Verriegelungselements (56) wenigstens ein zweites Eingriffselement einschließt, und das oder jedes erste Eingriffselement angeordnet ist, um das oder das jeweilige zweite Eingriffselement in Eingriff zu nehmen, wenn das Verriegelungselement (56) den Kolben (36, 236) in seiner ausgefahrenen Position in Eingriff nimmt, um eine Bewegung des Kolbens (36, 236) in der zweiten axialen Richtung (52) zu verhindern.

4. Ventilanordnung nach einem der vorhergehenden Ansprüche, wobei die Verriegelungsvorrichtung (32, 132) ein erstes und ein zweites Ratschenelement (58, 60) einschießt, wobei das erste Ratschenelement (58) auf dem Kolben (36) angeordnet ist oder einen Teil davon ausbildet, wobei das zweite Ratschenelement (60) an dem Verriegelungselement (56) angeordnet ist oder einen Teil davon ausbildet, wobei das erste und das zweite Ratschenelement (58, 60) angeordnet sind, so dass das erste und das zweite Ratschenelement (58, 60) miteinander in Eingriff stehen können, um eine relative Bewegung zwischen dem ersten und zweiten Ratschenelement (58, 60) in einer Richtung zuzulassen und eine relative Bewegung zwischen dem ersten und dem zweiten Ratschenelement (58, 60) in der entgegengesetzten Richtung zu verhindern, um eine Bewegung des Kolbens (36) in der ersten axialen Richtung (50) zuzulassen und eine Bewegung des Kolbens (36) in der zweiten axialen Richtung (52) zu verhindern.

5. Ventilanordnung nach Anspruch 4, wobei das erste und das zweite Ratschenelement (58, 60) angeordnet sind, so dass das erste und das zweite Ratschenelement (58, 60) miteinander in Eingriff stehen, wenn sich der Kolben (36) in seiner ausgefahrenen Position befindet, und/oder wobei das erste oder das zweite Ratschenelement (58, 60) wenigstens ein vorstehendes Element (60) einschließt, wobei das oder jedes vorstehende Element ein asymmetrisches Profil aufweist.

6. Ventilanordnung nach einem der vorhergehenden Ansprüche, wobei das Verriegelungselement (56) angeordnet ist, um von dem Kolben (36) beabstandet zu sein, wenn sich der Kolben (36) in seiner nicht ausgefahrenen Position befindet, optional wobei der Kolben (36) geformt ist, um einen Spalt zwischen dem Kolben (36) und dem Verriegelungselement (56) zu definieren, wenn sich der Kolben (36) in seiner nicht ausgefahrenen Position befindet, und um einen Eingriff zwischen dem Kolben (36) und dem Verriegelungselement (56) zuzulassen, wenn sich der Kolben (36) in seiner ausgefahrenen Position befindet.

7. Ventilanordnung nach einem der vorhergehenden Ansprüche, wobei das Verriegelungselement (56) elastisch ablenkbar ist.

8. Ventilanordnung nach Anspruch 3, wobei sich das oder jedes erste Eingriffselement entlang einer axialen Länge des Kolbens (236) oder des Verriegelungselements (56) erstreckt, das oder jedes zweite Eingriffselement eine Halteformation einschließt, das erste und das zweite Eingriffselement miteinander in Eingriff gebracht werden können, um die axiale Bewegung des Kolbens (236) von seiner nicht ausgefahrenen Position zu seiner ausgefahrenen Position zu führen, wobei das oder jedes erste Eingriffselement ferner eine Rastformation einschließt, die Rastformation des oder jedes ersten Eingriffselements angeordnet ist, um die Halteformation des oder des jeweiligen zweiten Eingriffselements zu lokalisieren, wenn sich der Kolben (236) in seiner ausgefahrenen Position befindet, um eine Bewegung des Kolbens (236) in der zweiten axialen Richtung (52) zu verhindern.

9. Ventilanordnung nach Anspruch 8, wobei das oder jedes erste Eingriffselement ein Führungsschlitz (242) ist oder diesen einschließt, der angeordnet ist, um die entsprechende Halteformation aufzunehmen, um die axiale Bewegung des Kolbens (236) von seiner nicht ausgefahrenen Position zu seiner ausgefahrenen Position zu führen.

10. Ventilanordnung nach Anspruch 8 oder 9, wobei das oder jedes erste Eingriffselement geformt ist, um zu bewirken, dass sich der Kolben (236) während der axialen Bewegung des Kolbens (236) von seiner nicht ausgefahrenen Position zu seiner ausgefahrenen Position um seine Längsachse herum dreht.

11. Ventilanordnung nach einem der Ansprüche 8 bis 10, wobei die Rast- und Rückhalteformationen angeordnet sind, um eine weitere axiale Bewegung des Kolbens (236) in der ersten axialen Richtung (50) zuzulassen, wenn sich der Kolben (236) in seiner ausgefahrenen Position befindet.

12. Ventilanordnung nach einem der Ansprüche 8 bis 11, wobei das oder jedes erste Eingriffselement eine zusätzliche Rastformation einschließt, wobei die zusätzliche Rastformation des oder jedes ersten Eingriffselements angeordnet ist, um die entsprechende Halteformation zu lokalisieren, um eine axiale Bewegung des Kolbens (236) in der zweiten axialen Richtung (52) zu verhindern, wenn sich der Kolben (236) in einer weiter ausgefahrenen Position befindet, die von seiner ausgefahrenen Position axial versetzt ist.

13. Ventilanordnung nach einem der Ansprüche 8 bis 12, wobei das Verriegelungselement (56) an einem Bund (240) angeordnet ist oder einen Teil davon ausbildet, der den Kolben (36, 236) teilweise oder vollständig umgibt.

14. Ventilanordnung nach einem der vorhergehenden Ansprüche, wobei die Ventilanordnung mehrere Verriegelungsvorrichtungen (32, 132, 232) einschließt und das Ventil (26) mehrere Blattelemente einschließt, wobei der Kolben (36, 236) jeder Verriegelungsvorrichtung (32, 132, 232) in seiner ausgefahrenen Position mit einem jeweiligen Blattelement in Eingriff steht, um das Ventil (26) in der geschlossenen Ventilposition zu halten.

15. Rohrleitungskopplung (20) zur Verwendung in einer Fluidleitung, die die Ventilanordnung nach einem der vorhergehenden Ansprüche umfasst, optional wobei die Rohrleitungskopplung eine Abreißkopplung oder eine Freigabekopplung ist.

## Revendications

1. Ensemble soupape, destiné à être utilisé dans une conduite de fluide, l'ensemble soupape comprenant :
un dispositif de verrouillage (32, 132, 232) comportant :
un plongeur (36, 236) pour mettre en prise une soupape (26) dans le conduit de fluide, le plongeur (36, 236) agencé pour être mobile dans une première direction axiale (50) d'une position non déployée à une position déployée, le plongeur (36, 236), lorsqu'il est dans sa position déployée, conçu pour maintenir la soupape (26) dans une position de soupape fermée ; et
un élément de verrouillage (56) agencé pour mettre en prise le plongeur (36, 236) dans sa position déployée de manière à empêcher le mouvement du plongeur (36, 236) dans une seconde direction axiale (52), la seconde direction axiale (52) étant opposée à la première direction axiale (50),
dans lequel l'ensemble soupape comporte en outre :
un boîtier d'assemblage (22, 24) définissant un alésage creux le long duquel un matériau fluide peut s'écouler ; et
une soupape (26) mobile entre une position ouverte de soupape et une position fermée de soupape, la soupape (26), lorsqu'elle est dans la position ouverte de soupape, ouvrant l'alésage creux de manière à permettre au matériau fluide de s'écouler le long de l'alésage creux, la soupape (26), lorsqu'elle est dans la position fermée de la soupape, fermant l'alésage creux de manière à empêcher le matériau fluide de s'écouler le long de l'alésage creux,
dans lequel le plongeur (36, 236) dans sa position déployée met en prise la soupape (26) de manière à maintenir la soupape (26) dans la position de soupape fermée,
dans lequel la soupape (26) comporte une partie pivot (28), la partie pivot (28) étant accouplée de manière pivotante au boîtier d'assemblage (22, 24), la soupape (26) étant mobile entre la position ouverte de soupape et la position fermée de soupape lors du mouvement de pivotement de la partie pivot (28), dans lequel le plongeur (36, 236) dans sa position déployée met en prise la partie pivot (28) de manière à maintenir la soupape (26) dans la position fermée de soupape.

2. Ensemble soupape selon la revendication 1, dans lequel le dispositif de verrouillage (32, 132, 232) comporte en outre un élément de sollicitation conçu pour appliquer une force de sollicitation au plongeur (36, 236) dans la première direction axiale (50), éventuellement dans lequel l'élément de sollicitation est ou comporte un élément de sollicitation élastique, et en outre éventuellement dans lequel l'élément de sollicitation élastique est un ressort (38, 238).

3. Ensemble soupape selon l'une quelconque des revendications précédentes, dans lequel le plongeur (36, 236) ou l'élément de verrouillage (56) comporte au moins un premier élément de mise en prise, l'autre du plongeur (36, 236) ou de l'élément de verrouillage (56) comporte au moins un second élément de mise en prise, et le ou chaque premier élément de mise en prise est agencé pour mettre en prise le ou le second élément de mise en prise respectif lorsque l'élément de verrouillage (56) est mit en prise avec le plongeur (36, 236) dans sa position déployée de manière à empêcher le mouvement du plongeur (36, 236) dans la seconde direction axiale (52).

4. Ensemble soupape selon l'une quelconque des revendications précédentes, dans lequel le dispositif de verrouillage (32, 132) comporte des premier et second éléments de rochet (58, 60), le premier élément de rochet (58) étant agencé sur ou faisant partie du plongeur (36), le second élément de rochet (60) étant agencé sur ou faisant partie de l'élément de verrouillage (56), les premier et second éléments de rochet (58, 60) étant agencés de telle sorte que les premier et second éléments de rochet (58, 60) peuvent se mettre en prise mutuellement pour permettre un mouvement relatif entre les premier et second éléments de rochet (58, 60) dans une direction et empêcher un mouvement relatif entre les premier et second éléments de rochet (58, 60) dans la direction opposée de manière à permettre le mouvement du plongeur (36) dans la première direction axiale (50) et empêcher le mouvement du plongeur (36) dans la seconde direction axiale (52).

5. Ensemble soupape selon la revendication 4, dans lequel les premier et second éléments de rochet (58, 60) sont agencés de telle sorte que les premier et second éléments de rochet (58, 60) sont mutuellement en prise lorsque le plongeur (36) est dans sa position déployée, et/ou dans lequel l'un des premier et second éléments de rochet (58, 60) comporte au moins un élément en saillie (60), le ou chaque élément en saillie ayant un profil asymétrique.

6. Ensemble soupape selon l'une quelconque des revendications précédentes, dans lequel l'élément de verrouillage (56) est agencé pour être espacé du plongeur (36) lorsque le plongeur (36) est dans sa position non déployée, éventuellement dans lequel le plongeur (36) est façonné pour définir un espace entre le plongeur (36) et l'élément de verrouillage (56) lorsque le plongeur (36) est dans sa position non déployée et pour permettre la mise en prise entre le plongeur (36) et l'élément de verrouillage (56) lorsque le plongeur (36) est dans sa position déployée.

7. Ensemble soupape selon l'une quelconque des revendications précédentes, dans lequel l'élément de verrouillage (56) est déformable élastiquement.

8. Ensemble soupape selon la revendication 3, dans lequel le ou chaque premier élément de mise en prise s'étend le long d'une longueur axiale du plongeur (236) ou de l'élément de verrouillage (56), le ou chaque second élément de mise en prise comporte une formation de rétention, les premier et second éléments de mise en prise peuvent se mettre en prise mutuellement pour guider le mouvement axial du plongeur (236) de sa position non déployée à sa position déployée, dans lequel le ou chaque premier élément de mise en prise comporte en outre une formation d'encliquetage, la formation d'encliquetage du ou de chaque premier élément de mise en prise agencé pour localiser la formation de retenue du ou du second élément de mise en prise respectif lorsque le plongeur (236) est dans sa position déployée de manière à empêcher le mouvement du plongeur (236) dans la seconde direction axiale (52).

9. Ensemble soupape selon la revendication 8, dans lequel le ou chaque premier élément de mise en prise est ou comporte une fente de guidage (242) agencée pour recevoir la formation de rétention correspondante pour guider le mouvement axial du plongeur (236) de sa position non déployée à sa position déployée.

10. Ensemble soupape selon la revendication 8 ou la revendication 9, dans lequel le ou chaque premier élément de mise en prise est formé pour amener le plongeur (236) à tourner autour de son axe longitudinal pendant le mouvement axial du plongeur (236) de sa position non déployée à sa position déployée.

11. Ensemble soupape selon l'une quelconque des revendications 8 à 10, dans lequel les formations d'encliquetage et de rétention sont agencées pour permettre un mouvement axial supplémentaire du plongeur (236) dans la première direction axiale (50) lorsque le plongeur (236) est dans sa position déployée.

12. Ensemble soupape selon l'une quelconque des revendications 8 à 11, dans lequel le ou chaque premier élément de mise en prise comporte une formation d'encliquetage supplémentaire, la formation d'encliquetage supplémentaire du ou de chaque premier élément de mise en prise étant agencée pour positionner la formation de rétention correspondante de manière à empêcher un mouvement axial du plongeur (236) dans la seconde direction axiale (52) lorsque le plongeur (236) est dans une autre position déployée qui est décalée axialement de sa position déployée.

13. Ensemble soupape selon l'une quelconque des revendications 8 à 12, dans lequel l'élément de verrouillage (56) est agencé sur ou fait partie d'un collier (240) qui entoure partiellement ou totalement le plongeur (36, 236).

14. Ensemble soupape selon l'une quelconque des revendications précédentes, dans lequel l'ensemble soupape comporte une pluralité de dispositifs de verrouillage (32, 132, 232), et la soupape (26) comporte une pluralité d'éléments de pétale, dans lequel le plongeur (36, 236) de chaque dispositif de verrouillage (32, 132, 232) dans sa position déployée se met en prise avec un élément de pétale respectif de manière à maintenir la soupape (26) dans la position de soupape fermée.

15. Raccord de canalisation (20), destiné à être utilisé dans une conduite de fluide, comprenant l'ensemble soupape selon l'une quelconque des revendications précédentes, dans lequel éventuellement le raccord de canalisation est un raccord à rupture ou un raccord à libération.
